# EUROPEAN PATENT SPECIFICATION

(11) **EP 1 425 511 B1**
(45) Date of publication and mention of the grant of the patent: **22.11.2006**
(21) Application number: 01941294.9
(22) Date of filing: 31.05.2001
(51) Int. Cl.: F03H 5/00

(54) **ANTIMATTER ENGINE**
ANTIMATERIEN-TRIEBWERK
MOTEUR A ANTIMATIERE

(30) Priority: 25.04.2001 MX 0004100
(43) Date of publication of application: 09.06.2004
(73) Proprietor: De la Pena Llaca, Fernando, Tulancingo de Bravo, Hidalgo 43600 (MX)
(72) Inventor: De la Pena Llaca, Fernando, Tulancingo de Bravo, Hidalgo 43600 (MX)
(74) Representative: Duran Benejam, Luis
(86) International application number: PCT/MX2001/000029
(87) International publication number: WO 2002/086317

(56) References cited:
- NORDLEY G.D.: 'Application of antimatter - electric power to interstellar propulsion' JOURNAL OF THE BRITISH INTERPLANETARY SOC. vol. 43, 01 June 1990, LONDON, pages 241 - 258, XP000133006
- KAMMASH T. ET AL.: 'Antimatter-driven fusion propulsion scheme for solar system exploration' JOURNAL OF PROPULSION AND POWER. AIAA vol. 8, no. 3, 01 May 1992, NEW YORK, pages 644 - 649, XP000268294
- SCHMIDT G.R. ET AL.: 'Antimatter requirements and energy costs for near-term propulsion applications' JOURNAL OF PROPULSION AND POWER. AIAA vol. 16, no. 5, September 2000, NEW YORK, pages 923 - 928, XP000954920

## Description

### AIM OF THE INVENTION

This invention relates to an antimatter engine for propelling spacecraft within the atmosphere and outer space.

### BACKGROUND TO THE INVENTION

The only propulsion formula that currently exists for a spacecraft in outer space, and offers practical results, is the use of rockets which, availing of the powerful energy produced in certain exothermic chemical reactions, are propelled by the expulsion of fuel gases in the opposite direction to advancement. An alternative of said chemical reactions is to use the energy produced in a matter and antimatter reaction.

For example the document "Application of antimatter-electric power to interstellar propulsion" by G.D. Nordley is known, published in the Journal of the British Interplanetary Soc. (ISBN 0007-084x). This document contains a detailed disquisition on the use of the energy from a possible antimatter engine to create an electrical power that enables a spacecraft to move. However, the control of said engine and the reaction confinement are achieved by using the engine's electromagnetic components, which leads to a decreased performance because the kinetic energy from the matter and antimatter reaction is not used.

Also the document "Antimatter-driven fusion propulsion scheme for solar system exploration" by T. Kammash is known, published in the Journal of propulsion and power AIAA (ISBN 0748-4658). In this document the author comments on the technical possibility, which, in energy terms, favours the use of the annihilation matter-antimatter of hydrogen reaction to propel a spacecraft. Although it does not detail any practical exercise, it does establish how to keep the reactor stable using a laser so that propulsion is sufficient.

A third document related to the subject is "Antimatter Requirements and Energy Costs for Near-Term Propulsion Applications", by G. R. Schmidt, published in the Journal of Propulsion and Power (ISBN 0748-4658). This document describes various theoretical engine models that enable a spacecraft to be propelled with the consequent energetic balance. Among the various models mentioned, there is one in which the engine propels the spacecraft by means of the expulsion of a mixture of protons and antiprotons in reaction. However, it does not describe the way in which said engine and its components are managed.

### DESCRIPTION OF THE INVENTION

The characteristic details of this engine are clearly shown in the following description and in the 3 drawings attached, indicating the parts, its control system and the description of the reaction.

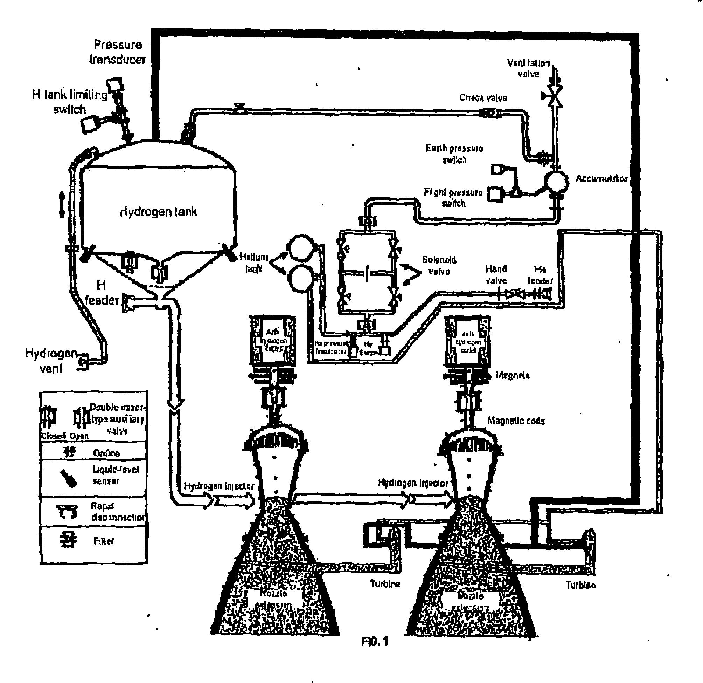

As is shown in figure 1, this engine is mainly formed from a hydrogen tank, a pressure transducer for the hydrogen tank, a limiting switch for the hydrogen tank which will indicate the level thereof, a hydrogen feeder, two helium tanks, a pressure transducer for the helium tanks, a limiting switch for each helium tank, a helium feeder to supply the tanks, 2 antimatter packages, magnets, magnetic coils, an accumulator and two turbines.

To start the engine, it is important to analyse the quantity of hydrogen we available to create the reaction, for which reason two liquid-level sensors are included (in this case of hydrogen) to send to the control system the quantity of hydrogen that will be mixed with the anti-hydrogen (approximately 1 atom for each anti-atom) to create the required reaction.

Two auxiliary valves will release the hydrogen, which will reach the engine, a check valve, which will indicate the pressure in the system to make sure it does not exceed the limits, in case the control system fails.

An ordinary ventilation valve is included, which will avoid a vacuum from being created which does not let the materials escape.

When the inlet is opened for the gases, an accumulator records a sample of the previously released gases (hydrogen and helium) by means of the check valves, from the accumulator they reach an earth pressure switch (if the engine is used in the atmosphere) and another of flight pressure (if the engine is used in outer space) which will have the function of compensating the internal pressure (that in the engine components, within the ship) against the external pressure of the engine (that which is on the outer part of the engine such as in the nozzles).

The helium that exits and goes to the accumulator passes through the solenoid valves, as is observed in the engine diagram (figure 1), wherein, on sending the signal to the control system, the solenoids act by opening the valves and releasing the gas, from here the helium is sent to the pressure regulators and sent to the turbines acting as a pressurizer.

The helium generates pressure bleeding the main valves and actuators and bleeds the booster to start it, the control system then sends the signal, the antihydrogen is released from the tanks, which moves down between magnets which are placed after the anti-matter containers which avoid that when the anti-atom(s) is/are released they collide with any particles and cause an explosion inside the motor. The anti-atom(s) continue(s) to move downwards but now by means of magnetic coils which are placed after the magnets to guide the anti-atom(s) to their destination, without it/them colliding with an atom (the magnets or magnetic coils attract the particles to the walls leaving the anti-particles free in the centre so that they do not collide before time).

When the anti-atoms move downwards, the hydrogen atoms required for the explosion begin to be sent by hydrogen injectors, which are responsible for sending the hydrogen to where the anti-hydrogen is so that they both collide and with this the required reaction "takes place".

When they reach the turbines, the explosion is created between the atoms and anti-atoms. The turbines have the function of changing this energy released into kinetic energy, creating a propulsion when the turbines rotate and guiding the explosion, expulsing it to the nozzle extension and from there releasing it into space, already having created the impulse necessary to displace the ship.

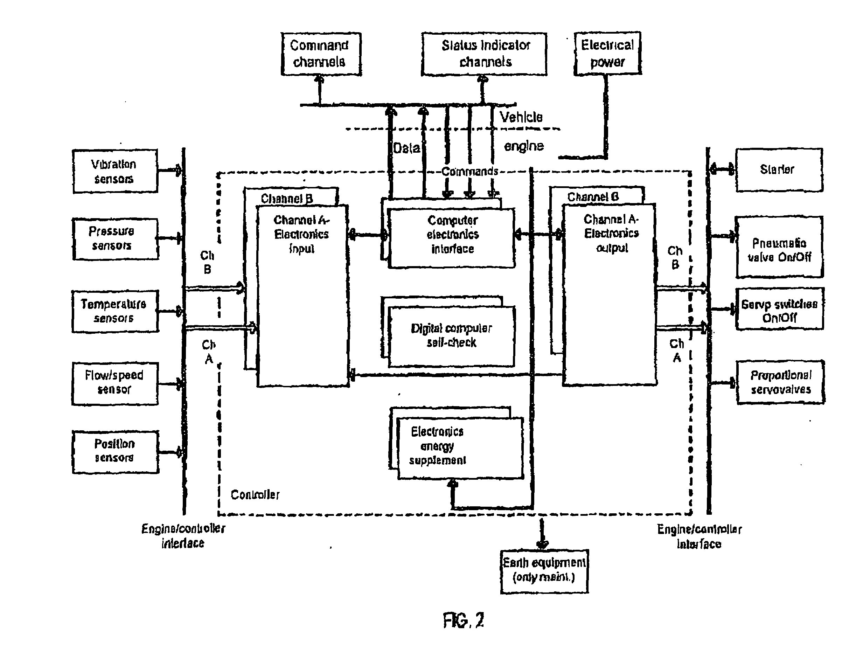

The control system (figure 2) comprises an engine sensor data input (electronics input) divided in vibration, pressure, temperature, flow/speed and position sensors, as with the electronics input, which is the interface between the engine and the controller, channelling the input sensor signals through two channels (A and B), transforming the signals so that the digital computer can read them.

There is also a data processing area (digital computer) provided by a computer electronics interface, which has the function of being the communication between the electronics, input, to analyse the data and being the bridge to the electronics output, the values already being transformed by the computer according to the security status so that the necessary adjustments are made in the electronics output, which is done by sending the data to the command channels wherein the security status is analysed, and returning the signal by commands which the computer interprets so that the electronics output are modified.

Likewise, it is connected to the status indicating channels, which will send engine status signals (temperature, pressure levels, etc.). Finally, it is connected to the electrical power, which will energize the engine's functions. It also has self-checking of the digital computer. This part is that which makes sure the computer is working, by means of a series of operations to verify the correct arithmetic and data transfer operations. Finally, it includes a maintenance control (earth equipment), so that it gives a report of the computer operations and if there is a failure code "electronics". The last section of this control system is that of the engine valve control (electronics output) formed by the electronics output which is the signal which will be sent to the devices. This signal is that which the digital computer sends, according to the status analysis that is made to perform the necessary modifications, this is the controller/ engine interface, towards the following aforementioned devices.

The devices are the starter, on/off of the pneumatic valves, on/off of the servo-switches and proportional servovalves.

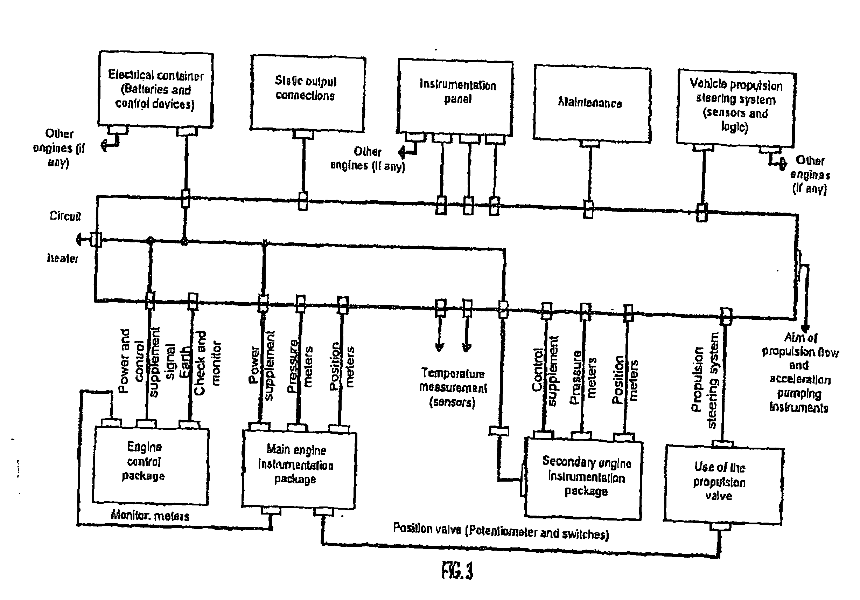

Finally a block diagram is included (figure 3) wherein the engine connections are shown by blocks.

## Claims

1. Antimatter engine, **characterised in that** it is made up mainly of a hydrogen tank, a pressure transducer for the hydrogen tank, a limiting switch for the hydrogen tank which will indicate the level thereof, a hydrogen feeder, two helium tanks, a pressure transducer for the helium tanks, a limiting switch for each helium tank, a helium feeder to feed the tanks, two antimatter packages, magnets, magnetic coils, an accumulator, hydrogen injectors and two turbines associated to respective extension nozzles; **in that** it includes two auxiliary valves that will release the hydrogen that will reach the engine, a check valve indicating the pressure in the system; **in that** it includes a ventilation valve, which will prevent a vacuum from being created that does not let the materials escape; and **in that** it includes an earth pressure switch and an in-flight pressure switch.

2. Engine, according to claim 1, **characterised in that** it includes a control system with engine sensor data input; divided into vibration, pressure, temperature, flow/speed and position sensors, electronics input, which is the interface between the engine and the controller, channelling the signals from the input sensors to a digital computer; and **in that** the control system is associated with the engine valves consisting of the electronics output to the starter, on/off of the valves, on/off of the switches and proportional valves.

3. Engine, according to claim 1, **characterised in that** the turbines are associated with the nozzles in order to provide the energy explosion between atoms and anti-atoms, directing the explosion towards the nozzle extension and space.

4. Engine, according to claim 1, **characterised in that** the magnetic coils are provided after the magnets to direct the anti-atom in the antimatter package to the nozzles and turbines.

## Patentansprüche

1. Antimateriemotor, **dadurch gekennzeichnet, dass** er hauptsächlich aus einem Wasserstofftank, einen Druckmesswertgeber für diesen Tank, einen entsprechenden Begrenzungsschalter zur Anzeige des Wasserstoffstands, eine Wasserstofffülleinrichtung, zwei Heliumtanks, einen Druckmesswertgeber für diese beiden Tanks, einen Begrenzungsschalter für jeden Tank, eine Heliumfülleinrichtung zum Befüllen der Tanks, zwei Antimateriebehälter, Magneten, Magnetspulen, einen Speicher, Wasserstoffinjektoren und zwei Turbinen, die in Verbindung mit den Expansionsdüsen stehen, besteht. Des Weiteren **dadurch**, dass er zwei Hilfsventile zur Wasserstofffreigabe zum Motor hin und ein Prüfventil zur Anzeige des Drucks im System aufweist sowie ein Belüftungsventil, das die Bildung von Vakuum vermeidet, was das Austreten der Einsatzstoffe verhindern würde. Ebenso gibt es je einen Druckschalter an Land und einen für den Flug.

2. Motor, entsprechend dem Patentanspruchs 1, **dadurch gekennzeichnet, dass** er ein Kontrollsystem mit Dateneingang der Motorsensoren aufweist, welcher in Vibrations-, Druck-, Temperatur-, Strömungs-/Geschwindigkeits- und Positionssensoren aufgeteilt ist, sowie einen Elektronikeingang, der als Schnittstelle zwischen Motor und Kontrollsystem agiert und die eingangsseitig vorhandenen Sensorsignale auf einen Digitalcomputer leitet. Des Weiteren **dadurch**, dass das Kontrollsystem mit den Motorventilen durch einen Elektronikausgang zum Anlasser, dem Ein-/Ausschalten der Ventile sowie dem Ein-/Ausschalten der Schalter und Proportionalventile in Verbindung steht.

3. Motor, entsprechend dem Patentanspruch 1, **dadurch gekennzeichnet, dass** die Turbinen mit den Expansionsdüsen zur Ausnutzung der Explosionsenergie zwischen Atomen und Antiatomen in Verbindung stehen, indem diese zur Düsenerweiterung und nach außen hin gerichtet sind.

4. Motor, entsprechend dem Patentanspruch 1, **dadurch gekennzeichnet, dass** die Magnetspulen hinter den Magneten angebracht sind, um das Antiatom des Antimaterienbehälters zu den Expansionsdüsen und Turbinen zu leiten.

## Revendications

1. Moteur à antimatière, **caractérisé en ce qu'**il est principalement composé d'un réservoir d'hydrogène, d'un transducteur de pression pour le réservoir d'hydrogène, d'un disjoncteur de sécurité pour le réservoir d'hydrogène, lequel indiquera le niveau de celui-ci, un chargeur à hydrogène, deux réservoirs d'hélium, un transducteur de pression pour les réservoirs d'hélium, un disjoncteur de sécurité pour chaque réservoir d'hélium, un chargeur à hélium pour alimenter les réservoirs, deux réceptacles pour antimatière, des aimants, des bobines d'électro-aimant, un accumulateur, des injecteurs d'hydrogène et deux turbines connectées aux tuyères-rallonges respectives; et **en ce qu'**il comprend deux soupapes de démarrage pour libérer l'hydrogène qui arrivera au moteur, une soupape de retenue indiquant la pression dans le système; et **en ce qu'**il comprend un volet de ventilation, lequel évitera la création de vide qui ne laisserait pas sortir les matières; et **en ce qu'**il comprend un mano-contact sur terre et un mano-contact en vol.

2. Moteur, selon la revendication 1, **caractérisé en ce qu'**il comprend un système de contrôle avec entrée de données du détecteur du moteur; réparti en détecteurs de vibration, de pression, de température, de flux/vitesse et de position, entrée du dispositif électronique, qui est l'interface entre le moteur et le contrôleur, canalisant les signaux depuis les détecteurs d'entrée vers un ordinateur numérique; et **en ce que** le système de contrôle présente une connexion entre les soupapes du moteur, consistant en une sortie du dispositif électronique vers le démarreur, mise en marche/arrêt des soupapes, connexion/déconnexion des disjoncteurs et soupapes proportionnelles.

3. Moteur, selon la revendication 1, **caractérisé en ce que** les turbines sont connectées aux tuyères afin d'utiliser l'énergie libérée par l'explosion entre atomes et antiatomes, en dirigeant l'explosion vers la tuyère-rallonge et l'espace.

4. Moteur, selon la revendication 1, **caractérisé en ce que** les bobines d'électro-aimant sont placées après les aimants pour diriger l'antiatome, qui se trouve dans le réceptacle pour antimatière, vers les tuyères et les turbines.
